# EUROPEAN PATENT APPLICATION

(11) **EP 3 741 561 A1**
(43) Date of publication of application: **25.11.2020**
(21) Application number: 20175955.2
(22) Date of filing: 22.05.2020
(51) Int. Cl.: B32B 27/36, B32B 27/38, C08L 63/10, C08L 67/06, C09D 163/10, C09D 167/06, E04B 1/66

(54) **COMPOSITIONS AND METHODS FOR WATERPROOFING APPLICATIONS**

(30) Priority: 23.05.2019 GB 201907284
(71) Applicant: G & B (North West) Ltd., Wigan, Greater Manchester WN6 8RY (GB)
(72) Inventor: STRATOS, Chialton Matthew, Wigan, Greater Manchester WN6 8RY (GB); KALE, Rohit Satish, Wigan, Greater Manchester WN6 8RY (GB)
(74) Representative: Barker Brettell LLP

(57) **Abstract**

The present invention provides a composition comprising unsaturated polyester resin (UPE) and vinyl ester resin (VE), a system for waterproofing applications comprising said composition and a method for waterproofing a surface. A waterproofing material and a waterproofing membrane comprising a blend or mixture of said composition and a method for producing said waterproofing material and membrane are also provided.

## Description

### Field of the invention

The present invention is directed to a composition comprising unsaturated polyester resin (UPE) and vinyl ester resin (VE). The present invention also provides a system and method for waterproofing surfaces. The system and method may be particularly applicable to waterproofing wet room surfaces.

### Background of the invention

The use of composite sheets comprising a waterproof layer in the waterproofing of surfaces, such as walls and floors in a wet room is well known in the prior art. The prior art composite sheets feature a fastening layer on both surfaces of the waterproof layer to facilitate the gluing of the composite sheet to the surface to be waterproofed, and to provide a surface or a substrate on which tiles may be adhered by a cement-based tile adhesive. Such fastening layers or substrates are made up of a fibrous/porous material providing adhesion properties to adhere the composite sheet to a surface to be waterproofed and for providing adhesion for a tile adhesive used for mounting tiles to the surface of the composite sheet facing in the opposite direction to the surface to be waterproofed.

The fastening /adhesion layers are required since the waterproof layer, a polymer membrane or metal foil, has a smooth surface not suitable for adhering to the adhesives. During waterproofing, multiple adjacent composite sheets are glued to the surface to be waterproofed and the seams/joins between the composite sheets are sealed. A common and relatively simple method of sealing the seams is the use of a sealing strip comprising a waterproof layer and securing the layers as in the composite sheet. The sealing strip is glued over the seam by using a glue/adhesive applied to the seam area before application of the sealing strip. However, such sealing does not provide a completely waterproofed seal. Due to the capillary effect caused by the porous/fibrous fastening layer on each side of the seam, a small amount of water will reach the seam and the surface to be waterproofed. Furthermore, the method is relatively time-consuming and prone to errors due to uneven or insufficient application of the glue/adhesive before applying the sealing strip.

The aim of the present invention is to provide a composition and waterproofing material/system which avoids the use of adhesive/glues for adhering waterproofing membranes and a sealing strip and which eliminates the disadvantages mentioned above. The present invention also addresses concerns regarding human exposure to a styrene solvent.

### Summary of the invention

In a first aspect the present invention provides a composition comprising unsaturated polyester resin (UPE) and vinyl ester resin (VE).

In a second aspect the present invention provides a system for waterproofing applications comprising a composition according to the first aspect of the invention and a hardener.

In a third aspect there is provided a waterproofing material comprising a blend or mixture of the composition according to the first aspect of the invention and a hardener, wherein said blend or mixture is cured.

In a fourth aspect the present invention provides a waterproofing membrane comprising a blend or mixture of a composition according to the first aspect of the invention and a hardener, wherein said blend or mixture is applied to a surface and cured.

In a fifth aspect the present invention provides a method for producing a waterproofing material or membrane, the method comprising
a) providing a composition according to the first aspect of the invention
b) adding a hardener;
c) mixing the hardener and the composition;
d) applying the composition and hardener mixture to a surface, optionally along with a reinforcing material; and
e) curing the composition and hardener mixture.

In a sixth aspect there is provided a method for waterproofing a surface, the method comprising
a) providing a composition according to the first aspect of the invention
b) adding a hardener;
c) mixing the hardener and the composition;
d) applying the composition and hardener mixture to a surface to be waterproofed along with a reinforcing material;
e) impregnating the reinforcement material with the composition and hardener mixture; and
f) curing the composition and hardener mixture.

### Detailed description of the invention

In a first aspect the present invention relates to a composition comprising unsaturated polyester resin (UPE) and vinyl ester resin (VE).

The composition of the invention can be used in the waterproofing of surfaces such as those in wet rooms. Said composition provides advantages over current materials used in waterproofing applications, such as for example prefabricated sheet membranes used to waterproof walls and floors in a wet rooms. The composition of the present invention allows a more convenient preparation and mixing on the application site, provides optimum workability and pot life and is easier to handle and apply to a surface.

Advantageously, the composition of the present invention can be carried to a site to be waterproofed in a container and can be added to on site to prepare systems and materials for waterproofing applications, for example, the composition can be conveniently mixed with a hardener and easily applied on a surface to be waterproofed.

In one embodiment the composition according to the invention, comprises a liquid mixture or blend of unsaturated polyester resin (UPE) and vinyl ester resin (VE).

In one embodiment the amount of unsaturated polyester resin (UPE) and vinyl ester resin (VE) in the composition may be from 20 to 80% w/w. It may be that the amount of unsaturated polyester resin (UPE) and vinyl ester resin (VE) in the composition is from 25 to 80%, such as from such as from 30 to 80% w/w, or from 35 to 80% w/w, or from 40 to 80% w/w, or from 45 to 80% w/w, based on the total weight of the composition. It may, for example, be from 20 to 75% w/w, or from 20 to 70% w/w, or from 20 to 65% w/w, or from 20 to 60% w/w, based on the total weight of the composition. It may be that the composition comprises unsaturated polyester resin (UPE) and vinyl ester resin (VE) in an amount from 24 to 76% w/w, such as from 28 to 74% w/w, or from 28 to 70% w/w, or from 32 to 70% w/w, or from 32 to 66% w/w, or from 36 to 66% w/w, or from 36 to 62% w/w, or from 40 to 62% w/w, or from 44 to 62% w/w, or from 48 to 62% w/w, based on the total weight of the composition.

In one embodiment the amount of unsaturated polyester resin (UPE) in the composition is from 10 to 70%, such as from 10 to 65% w/w, or from 10 to 60% w/w, or from 10 to 55% w/w, or from 10 to 50% w/w, or from 10 to 45% w/w, or from 10 to 40% w/w, or from 10 to 35% w/w, based on the total weight of the composition. It may, for example, be from 12 to 70% w/w, or from 12 to 65% w/w, or from 12 to 60% w/w, or from 12 to 55% w/w, or from 12 to 50% w/w, such as from 12 to 45% w/w, or from 12 to 40% w/w, or from 12 to 35% w/w, based on the total weight of composition. It may be that the composition comprises unsaturated polyester resin (UPE) in an amount from 14 to 60% w/w, such as from 14 to 55% w/w, e.g. from 14 to 50% w/w, or from 14 to 45% w/w, or from 14 to 40% w/w, or from 14 to 35% w/w, based on the total weight of the composition.

In one embodiment the composition comprises a concentration of vinyl ester resin (VE) from 10% to 70%, such as from 10 to 65% w/w, or from 10 to 60% w/w, or from 10 to 50% w/w, or from 10 to 45% w/w, or from 10 to 40% w/w, based on the total weight of composition. It may, for example, be from 14 to 70% w/w, or from 14 to 65% w/w, or from 14 to 60% w/w, or from 14 to 55% w/w, or from 14 to 50% w/w, or from 14 to 45% w/w, or from 14 to 40% w/w, based on the total weight of the composition. It may be that the composition comprises vinyl ester resin (VE) in an amount from 18 to 70% w/w, such as from 18 to 65% w/w, or from 18 to 60% w/w, or from 18 to 55% w/w, or from 18 to 50% w/w, or from 18 to 45% w/w, or from 18 to 40% w/w, based on the total weight of the composition. The amount of vinyl ester resin (VE) in the composition may be from 22 to 70%, e.g. from 22 to 65% w/w, or from 22 to 60% w/w, or from 22 to 55% w/w, or from 2 to 50% w/w, or from 22 to 45% w/w, or from 22 to 40% w/w, based on the total weight of the composition.

In one embodiment, the unsaturated polyester resin (UPE) may be a reaction product of ethylene glycol, propylene glycol, diethylene glycol, orthophthalic anhydride, maleic anhydride, isophthalic acids or dimethyl terephthalate. These are, for example, commercially available as Norsodyne, Polydyne, Stypol, Polylite all from Polynt Composites, Synolite, Palatal from Aliancys or Crystic from Scott Bader.

In one embodiment, the unsaturated polyester resin (UPE) is an orthophthalic compound.

In one embodiment, the vinyl ester resin (VE) may be a reaction product of bisphenol-A (BPA) epoxy, Novolac epoxy and acrylic or methacrylic acid. These are, for example, commercially available as Dion from Polynt Composites or Atlac and Beyone from Aliancys.

In one embodiment, the vinyl ester resin (VE) is a combination of epoxy methacrylate based on bisphenol-A and phenolic-Novolac epoxy.

In one embodiment, the composition of the present invention is styrene free or may contain a negligible amount of styrene (0 to 5 % w/w, based on the total weight of the composition).

The composition of the present invention may comprise any other suitable ingredients, materials and/or compounds.

In one embodiment the composition of the present invention further comprises other ingredients or compounds such as diluents or solvents, accelerators, colour pigments, fillers or combinations thereof.

In one embodiment the composition according to the invention comprises one or more diluents or solvents. Examples of suitable diluents or solvents used in the composition include vinyl toluene, methyl methacrylate, 1,6 hexane diol diacrylate, diallyl phthalate, methacrylic acid, trimethylol propane triacrylate and combinations thereof. Preferably the composition comprises vinyl toluene, methyl methacrylate, hexane diol diacrylate, diallyl phthalate or combinations thereof.

In one embodiment the total amount of diluents or solvents in the composition is from 5 to 60%, such as from 5 to 55% w/w, or from 5 to 50% w/w, or from 5 to 45% w/w, or from 5 to 40% w/w, based on the total weight of the composition. It may, for example, be from 10 to 60% w/w, such as from 10 to 55% w/w, or from 10 to 50% w/w, or from 10 to 45% w/w, or from 10 to 40% w/w. It may be that diluents or solvents are present in the composition in an amount from 15 to 60% w/w, such as from 15 to 55% w/w, or from 15 to 50% w/w, or from 15 to 45% w/w, or from 15 to 40% w/w, or from 20 to 60% w/w, or from 20 to 55% w/w, or from 20 to 50% w/w, or from 20 to 45% w/w, or from 20 to 40% w/w, based on the total weight of the composition.

The composition of the invention may comprise one or more accelerators. When the composition comprises an accelerator, the total amount of accelerator in the composition may be from 0.1 to 20%, such as from 0.1 to 15% w/w, or from 0.1 to 10% w/w, or from 0.1 to 8% w/w, based on the total weight of the composition. It may be that the accelerator is present in the composition in an amount from 0.5 to 20% w/w, such as from 0.5 to 15% w/w, or from 0.5 to 10% w/w, or from 0.5 to 8% w/w, or from 1 to 20% w/w, or from 1 to 15% w/w, or from 1 to 10% w/w, or from 1.5 to 20% w/w, or from 1.5 to 15% w/w, or from 1.5 to 10% w/w, or from 2 to 20% w/w, or from 2 to 15% w/w, or from 2 to 10% w/w, based on the total weight of the composition.

Examples of suitable accelerators include cobalt naphthenate, cobalt octoate, cobalt stearate, cobalt acetate, potassium octoate, dimethyl aniline (DMA), diethyl aniline, dimethyl-p-toluidine or combinations thereof.

In one embodiment the composition of the invention may further comprise one or more fillers. Preferably the filler is selected from calcium carbonate, fumed silica, precepted silica, talc, kaolin clays, organically modified phyllosilicates (sold as Cloisite by BYK additives), aluminosilicates (zeolite), glass beads, glass bubbles and combinations thereof.

In one embodiment the composition of the invention comprises one or more fillers, wherein the total amount of filler is 60% or less, such as 50% w/w or less, or 45% w/w or less, or 40% w/w or less, or 35% w/w or less or 30% w/w or less, or 25% w/w or less, or 20% w/w or less, based on the total weight of the composition. It may be that the one or more fillers are present in an amount from 0 to 60% w/w, such as from 0 to 50% w/w, or from 0 to 45% w/w, or from 0 to 40% w/w, or from 0 to 35% w/w, or from 0 to 30% w/w, or from 0 to 25% w/w, based on the total weight of the composition. It may, for example, be from 1 to 60% w/w, or from 2 to 50% w/w, or from 2 to 40% w/w, or from 3 to 35% w/w, based on the total weight of the composition.

The composition of the invention may further contain one or more colour pigments. Colour pigments may be of organic or inorganic origin.

The present invention further provides, in a second aspect, a system for waterproofing applications (e.g. wet room applications) comprising a composition as described above in accordance with a first aspect of the invention and a hardener.

Liquid compositions or coatings applied to prefabricated sheet membranes used in existing waterproofing applications (e.g. wet room applications) need to have low viscosity to be applied as self-levelling coatings and a sufficiently long open time to enable hand application.

The system of the invention provides advantages over existing prefabricated sheet membranes used in wet room waterproofing applications. The present system conveniently allows an easier application. The system of the present invention can be prepared on the application site providing optimum workability and pot life. The system allows an easier application and provides improved water tightness.

The system of the present invention can be applied in liquid form on a site and enables formation of a cured product that can be used in waterproofing application such as in wet rooms. The system can be easily mixed and applied on a surface to be waterproofed. Upon curing the mixture solidifies into a continuous membrane which imparts water tightness. The system can be liquid/wet applied using hand layup or spray layup technique. The system of the present invention is self-levelling and can be conveniently used on uneven or non-smooth surfaces. The system also has bridge-gaping ability.

Advantageously, the system of the present invention does not require a sealing strip to seal joins/seams between membranes.

In one embodiment, the hardener is a curing agent.

The hardener or curing agent may be selected from cold curing peroxides, methyl ethyl ketone peroxide (MEKP), methyl isobutyl ketone peroxide, acetyl acetone peroxide, benzoyl peroxide, cyclohexane peroxide, ketone peroxide blends and combinations of thereof.

In one embodiment, the hardener or curing agent is MEKP which provides much longer gel and gel to cure times, commercially available as Butanox-LPT from Akzo-Nobel, Luperox K12 from Arkema or Norox KP-925 H from United Initiators.

Peroxides used as hardeners may additionally have a phlegmatizer. The phlegmatizer used with peroxide may be phthalates and/or mineral oils - this is known in the industry and keeps peroxide stable.

In one embodiment the concentration of hardener (e.g. a curing agent) in the system is from 0.1 to 3%, such as from 0.1 to 2.8% w/w, or from 0.1 to 2.6% w/w, or from 0.1 to 2.4% w/w, based on the total weight of the system. It may be that the hardener is present in the system in an amount from 0.2 to 3% w/w, such as from 0.4 to 3% w/w, or from 0.6 to 3% w/w, or from 0.8 to 3% w/w, or from 1 to 3% w/w, or from 1.2 to 3% w/w, or from 1.4 to 3% w/w, or from 1.6 to 3% w/w, or from 1.8 to 3% w/w, based on the total weight of the system. It may, for example, be from 0.3 to 2.9% w/w, or from 0.5 to 2.7% w/w, or from 0.7 to 2.5% w/w, or from 0.9 to 2.3% w/w, or from 1 to 2.1 % w/w, based on the total weight of the system.

In one embodiment the system for waterproofing applications of the invention comprises from 0.1 to 3% w/w of a hardener and from 1 to 99.9% w/w of a composition comprising unsaturated polyester resin (UPE) and vinyl ester resin (VE). The system can be supplied as a two-package system comprising, the composition as described above in accordance with a first aspect in a first container and the hardener can be supplied in a second container. For example, the composition and the hardener may be combined, e.g., by the end-user, shortly before use (e.g., 6 hours or less prior to use, 5 hours prior to use, 4 hours prior to use, 3 hours prior to use, 2 hours prior to use, 1 hour prior to use, 30 minutes prior to use, 15 minutes prior to use) at the point-of-use. Other two-container systems are within the knowledge of one of ordinary skill in the art. In the context of the present invention, the term "point-of-use" refers to the point at which the system is applied to a surface (e.g., the wet room surfaces).

When the composition and the hardener of the system are provided in different containers, the components may be combined or mixed at the point-of-use with the use of a mixing device. Mixing devices are generally known in the art and may include, for example, a high speed mixer or mixing rod or stirrer. If the system is to be produced using point-of-use mixing, the composition and hardener of the system are separately stored in two or more storage containers, as appropriate.

The system can be supplied as a three or more-package system comprising a first container with the composition, a second container with the hardener and one or more materials such as reinforcing materials (eg., a non-woven polyester fleece) and/or an oxygen and moisture barrier film.

Alternatively the system may be supplied as a one-package system comprising the composition as described above in accordance with a first aspect and the hardener. The skilled person would know that this type of one-package system may comprise additional compounds and additives in order to inhibit or delay the curing reaction during storage.

The present invention further provides a waterproofing material comprising a blend or mixture of a composition as described above in accordance with the first aspect of the invention, and a hardener, wherein said blend or mixture is cured.

Therefore the present invention also provides a cured waterproofing material comprising a blend or mixture of the composition in accordance with the first aspect of the invention and a hardener.

The hardener may be as described above.

Therefore, stated in another way, the present invention provides a cured waterproofing material comprising the system of the second aspect of the invention, in which the system is cured.

Advantageously, the waterproofing material of the invention can be applied as a liquid self-levelling coating to a surface. The composition comprising the resins can be carried to a site to be waterproofed in a container and mixed together with the hardener to form a mixture or blend which can be applied on a surface (such as walls and floor in a wet room). The mixture can be easily applied and has a sufficiently long open time to enable hand application, but still to cure fast enough at room temperature for further processing.

The hardener (e.g. a curing agent) cross-links the resins of the composition into a three-dimensional structure or material to form a solid membrane or sheet. Upon curing the mixture solidifies into a continuous material, for example a solid sheet or membrane which imparts water tightness. When fully cured the waterproofing material of the invention provides durable elasticity and strength in order to protect substrates and surfaces from water ingress and microbial attack.

Advantageously, the waterproofing material according to the invention does not require glue or adhesive for adhering to the surface to be waterproofed.

Advantageously, the waterproofing material of the present invention does not require a sealing strip to seal joins/seams between membranes.

The waterproofing material of the invention does not require fastening layers to facilitate the adhesion of tiles.

The waterproofing material forms a waterproof coating or membrane that may be resistant to alkaline environment of pH 8-10 for 10 years. The waterproofing material was tested under alkaline environment (pH 8-10) inside an accelerated weathering cabinet and the glass transition temperature (Tg) and modulus of elasticity (E) were examined using dynamic mechanical analyser (DMA).

The waterproofing material may have a very low or negligible water vapour transmission rate (WVTR) and very high-water vapour resistance (µ value). Methods of testing water vapour transmission rate (WVTR) and water tightness may be BS EN1931 and BS EN 1928.

The curing of the composition/hardener blend or mixture may occur in the temperature range of 5°C to 30°C, for example at a room temperature of 22°C. The curing of the composition and hardener mixture may be achieved at room temperature (e.g. 22 °C) and a humidity of 20-80% relative humidity (RH) (e.g. 50%RH).

In one embodiment the concentration of hardener (e.g. a curing agent) in the blend or mixture is from 0.1 to 3%, based on the total weight of the blend or mixture. It may be that the hardener is present in the blend or mixture in an amount from 0.2 to 3% w/w, such as from 0.4 to 3% w/w, or from 0.6 to 3% w/w, or from 0.8 to 3% w/w, or from 1 to 3% w/w, or from 1.2 to 3% w/w, or from 1.4 to 3% w/w, or from 1.6 to 3% w/w, or from 1.8 to 3% w/w, based on the total weight of the blend or mixture. It may, for example, be from 0.3 to 2.9% w/w, or from 0.5 to 2.7% w/w, or from 0.7 to 2.5% w/w, or from 0.9 to 2.3% w/w, or from 1 to 2.1 % w/w, based on the total weight of the blend or mixture.

In one embodiment the concentration of the composition in the blend or mixture is from 1 to 99.9% w/w, based on the total weight of the blend or mixture.

The waterproofing material of the present invention may further comprise a reinforcing material.

In the context of the present invention the reinforcing material might be a polymer membrane or sheet. In one embodiment the reinforcing material is a non-woven polyester fleece.

In one embodiment the non-woven polyester fleece is (40-300 g/m²).

The present invention also provides a waterproofing membrane for wet room applications comprising a blend or mixture of the composition according to the first aspect of the invention and a hardener, wherein said blend or mixture is applied to a surface and cured.

Stated another way the present invention also provides a waterproofing membrane for wet room applications comprising system according to the second aspect of the invention, wherein said blend or mixture is applied to a surface and cured.

The waterproofing membrane of the present invention may further comprise a reinforcing material as described above. In one embodiment the reinforcing material may be a non-woven polyester fleece (e.g. 40-300 g/m2).

In one embodiment the concentration of hardener (e.g. a curing agent) in the blend or mixture is from 0.1 to 3%, based on the total weight of the blend or mixture. It may be that the hardener is present in the blend or mixture in an amount from 0.2 to 3% w/w, such as from 0.4 to 3% w/w, or from 0.6 to 3% w/w, or from 0.8 to 3% w/w, or from 1 to 3% w/w, or from 1.2 to 3% w/w, or from 1.4 to 3% w/w, or from 1.6 to 3% w/w, or from 1.8 to 3% w/w, based on the total weight of the blend or mixture. It may, for example, be from 0.3 to 2.9% w/w, or from 0.5 to 2.7% w/w, or from 0.7 to 2.5% w/w, or from 0.9 to 2.3% w/w, or from 1 to 2.1 % w/w, based on the total weight of the blend or mixture.

In one embodiment the concentration of the composition in the blend or mixture is from 1 to 99.9% w/w, based on the total weight of the blend or mixture.

The present invention also relates a process or method for producing a waterproofing material or waterproofing membrane, the method comprising:
a) providing a composition as described herein above in accordance with the first aspect of the invention;
b) adding a hardener;
c) mixing the hardener and the composition;
d) applying the composition and hardener mixture to a surface, along with a reinforcing material if this is being used; and
e) curing the composition and hardener mixture.

In one embodiment, the method further comprises stirring the composition before the hardener is added.

In one embodiment the method for producing a waterproofing material or waterproofing membrane further comprises stirring the composition extensively for 5-10 minutes using a high speed mixer or mixing rod or stirrer. Preferably, the composition is stirred for 1-2 minutes.

In one embodiment the method for producing a waterproofing material or waterproofing membrane further comprises stirring the composition/hardener mixture. Said mixture may be stirred extensively for 5-10 minutes using a high speed mixer or mixing rod or stirrer.

In one embodiment the mixture is cured within 2 to 24 hours.

In one embodiment the mixture is cured at a temperature from 5°C to 30°C.

In one embodiment the curing of the composition and hardener mixture may be achieved at room temperature (e.g. 22 °C) and a humidity of 20-80% relative humidity (e.g. 50% relative humidity).

In one embodiment, the method further comprises applying a barrier film to cover the wet surface (e.g. after the composition/hardener mixture is applied) in order to reduce the curing times. The wet surface would comprise the composition and hardener mixture applied to a surface, along with a reinforcing material if this is being used.

The method for producing a waterproofing material or waterproofing membrane of the invention may further comprise applying an oxygen and moisture barrier film to cover the wet composition/hardener mixture applied to a surface in order to reduce the cure times at low temperature (5°C to 15°C) and high humidity conditions (50% to 80% RH) and to negate the effect of oxygen inhibition of the resin surface. The preferred oxygen and moisture barrier film can be selected from polyethylene terephthalate (PET), ethylene vinyl alcohol (EVOH), and polyvinyl fluoride (PVF) barrier polymer films.

In one embodiment, the barrier film may be textured or embossed.

The reinforcing material might be a polymer membrane or sheet as described above. In one embodiment the reinforcing material is a non-woven polyester fleece.

In one embodiment the applying step may be lamination by hand layup technique, spray layup, prepreg layup or combination of thereof.

The method for producing a waterproofing material or waterproofing membrane may further comprise coating the area to be waterproofed with the composition and hardener mixture, laying the reinforcing material (e.g. a non-woven polyester fleece sheet) on the coated surface and wet out thoroughly using a roller/brush or spray gun and paddle roller, coat the polyester fleece sheet with the mixture and paddle roll it until it is completely saturated with the mixture.

The present invention also relates to a method for waterproofing a surface, the method comprising
a) providing a composition as described herein above in accordance with the first aspect of the invention;
b) adding a hardener;
c) mixing the hardener and the composition;
d) applying the composition and hardener mixture to a surface to be waterproofed along with a reinforcing material;
e) impregnating the reinforcement material with the composition and hardener mixture; and
f) curing the composition and hardener mixture.

In one embodiment, the method for waterproofing a surface further comprises:
a) providing a composition as described herein above;
b) stirring the composition (e.g. using high speed mixer)
c) adding a hardener;
d) mixing the hardener and the composition;
e) applying the composition and hardener mixture to a surface along with a reinforcing material;
e) impregnating the reinforcement material with the composition and hardener mixture; and
f) curing the composition and hardener mixture.

In one embodiment, the method further comprises stirring the composition/hardener mixture. Said mixture may be stirred extensively for 5-10 minutes using a high speed mixer or mixing rod or stirrer.

In one embodiment the mixture is cured for 2 to 24 hours.

In one embodiment the curing of the composition and hardener mixture may be achieved at a temperature from 5°C to 30°C. In one embodiment the curing of the composition and hardener mixture may be achieved at room temperature (e.g. 22°C) and a humidity of 20-80% RH (e.g. 50% RH).

The method for waterproofing a surface of the present invention comprises applying a reinforcing material as described above. The composition and hardener mixture are applied along with a reinforcing material. The reinforcing material might be a polymer membrane or sheet as described above. In one embodiment the reinforcing material is a non-woven polyester fleece.

In one embodiment the applying step of the method for waterproofing a surface of the invention may be lamination by hand layup technique, spray layup, prepreg layup or combination of thereof. The lamination by hand layup technique comprises coating the area to be waterproofed with the composition and hardener mixture, laying a reinforcing material (e.g. a non-woven polyester fleece sheet) on the coated surface and wet out thoroughly using a roller / brush or spray gun and paddle roller, coat the polyester fleece sheet with the mixture and paddle roll it until it is completely saturated with the mixture.

In one embodiment, the method further comprises applying a barrier film to cover the wet surface (e.g. after the composition/hardener mixture is applied) in order to reduce the curing times, as described herein above. The wet surface would comprise the composition and hardener mixture applied to a surface, along with a reinforcing material if this is being used.

For example, the method may further comprise providing an oxygen and moisture barrier film to cover the wet composition and hardener mixture applied to a surface in order to reduce the cure times at low temperature (5°C to 15°C) and high humidity conditions (50% to 80% RH) to negate the effect of oxygen inhibition of the resin surface. The preferred oxygen and moisture barrier film can be selected from polyethylene terephthalate (PET), ethylene vinyl alcohol (EVOH), and polyvinyl fluoride (PVF) barrier polymer films.

In one embodiment, the barrier film may be textured or embossed.

The preferred barrier film can be selected from polyethylene terephthalate (PET), ethylene vinyl alcohol (EVOH), and polyvinyl fluoride (PVF) barrier polymer films

The method may further comprises covering the wet surface with a PET barrier film and paddle roll the surface to remove any air bubble and form an air tight surface contact with the barrier film.

The following examples are provided by way of illustration only and are not intended limit the scope of invention.

**Example 1: Composition 1**

| | w/w% |
|---|---|
| unsaturated polyester resin | 25 |
| vinyl ester resin | 25 |
| methyl methacrylate | 14 |
| 1, 6 hexane diol diacylate | 22 |
| cobalt naphthenate | 2.1 |
| potassium octoate | 1.3 |
| calcium carbonate | 6 |
| fumed silica | 4.6 |

**Example 2: Composition 2**

| | |
|---|---|
| unsaturated polyester resin | 17 |
| vinyl ester resin | 36 |
| methyl methacrylate | 11 |
| hexane diol diacylate | 8 |
| vinyl toluene | 5 |
| dimethyl aniline (dma) | 1.5 |
| cobalt naphthenate | 1.7 |
| potassium octoate | 1.1 |
| calcium carbonate | 6 |
| fumed silica | 4.6 |
| organically modified phyllosilicates | 5.8 |
| zeolite | 2.3 |

**Example 3 Composition 3**

| | |
|---|---|
| unsaturated polyester resin | 31 |
| vinyl ester resin | 28 |
| methyl methacrylate | 21 |
| vinyl toluene | 4 |
| diallyl phthalate | 11 |
| dimethyl aniline (DMA) | 0.8 |
| cobalt naphthenate | 2.9 |
| potassium octoate | 1.3 |

**Example 4 Composition 4**

| | |
|---|---|
| unsaturated polyester resin | 21 |
| vinyl ester resin | 34 |
| methyl methacrylate | 15 |
| hexane diol diacylate | 9.6 |
| vinyl toluene | 8.8 |
| cobalt naphthenate | 2.5 |
| organically modified phyllosilicates | 9.1 |

## Claims

1. A composition comprising unsaturated polyester resin (UPE) and vinyl ester resin (VE).

2. The composition of claim 1 wherein one or more of the following applies:
(a) the amount of unsaturated polyester resin (UPE) and vinyl ester resin (VE) is from 20 to 80% w/w, based on the total weight of the composition;
(b) the amount of unsaturated polyester resin (UPE) is from 10 to 70%, based on the total weight of the composition;
(c) the amount of vinyl ester resin (VE) is from 10 to 70%, based on the total weight of the composition.

3. The composition of claim 1 or claim 2 further comprising a diluent or solvent, an accelerator, a colour pigment, a filler or a combination thereof.

4. The composition of claim 3, wherein one or more of the following applies:
(a) the diluent or solvent is selected from vinyl toluene, methyl methacrylate, 1,6 hexane diol diacrylate, diallyl phthalate, methacrylic acid, trimethylol propane triacrylate and combination of thereof;
(b) the amount of diluent or solvent is from 5 to 60% w/w, based on the total weight of the composition;
(c) the accelerator is selected from cobalt naphthenate, cobalt octoate, cobalt stearate, cobalt acetate, potassium octoate, dimethyl aniline (DMA), diethyl aniline, dimethyl-p-toluidine and combinations of thereof;
(d) the amount of accelerator is from 0.1 to 20% w/w, based on the total weight of the composition;
(e) the filler is selected from calcium carbonate, fumed silica, precepted silica, talc, kaolin clays, organically modified phyllosilicates, aluminosilicates, glass beads, glass bubbles and combinations thereof;
(f) the amount of filler is 60% or less, based on the total weight of the composition.

5. The composition of any one of claims 2-4, wherein the composition is styrene free or contains a negligible amount of styrene.

6. A system for waterproofing applications comprising a composition as defined in claims 1-4 and a hardener.

7. The system of claim 6, wherein one or more of the following applies:
(a) the hardener is a curing agent;
(b) the hardener is selected from cold curing peroxides, methyl ethyl ketone peroxide (MEKP), methyl isobutyl ketone peroxide, acetyl acetone peroxide, benzoyl peroxide, cyclohexane peroxide, ketone peroxide blends and combinations of thereof;
(c) the amount of hardener is from 0.1 to 3% w/w, based on the total weight of the system.

8. A waterproofing material comprising a blend or mixture of a composition as defined in claims 1-5 and a hardener, wherein said blend or mixture is cured.

9. A waterproofing membrane comprising a blend or mixture of a composition as defined in claims 1-5 and a hardener, wherein said blend or mixture is applied to a surface and cured.

10. The waterproofing material of claim 8 or the waterproofing membrane of claim 9, wherein one or more of the following applies:
(a) the hardener is selected from selected from cold curing peroxides, methyl ethyl ketone peroxide (MEKP), methyl isobutyl ketone peroxide, acetyl acetone peroxide, benzoyl peroxide, cyclohexane peroxide, ketone peroxide blends and combinations of thereof;
(b) the amount of hardener is from 0.1 to 3% w/w, based on the total weight of the blend or mixture.

11. The waterproofing material of claims 8 or 10 or the waterproofing membrane of any one of claims 9 or 10, further comprising a reinforcing material.

12. A method for producing a waterproofing material or membrane, the method comprising
a) providing a composition as defined in claims 1-5;
b) adding a hardener;
c) mixing the hardener and the composition;
d) applying the composition and hardener mixture to a surface, optionally along with a reinforcing material; and
e) curing the composition and hardener mixture.

13. A method for waterproofing a surface, the method comprising
a) providing a composition as defined in claims 1-5;
b) adding a hardener;
c) mixing the hardener and the composition;
d) applying the composition and hardener mixture to a surface to be waterproofed along with a reinforcing material;
e) impregnating the reinforcement material with the composition and hardener mixture; and
f) curing the composition and hardener mixture.

14. The method for producing a waterproofing material or membrane of claim 12 or the method for waterproofing a surface of claim 13, further comprising applying a barrier film to cover the wet composition and hardener mixture applied to a surface, wherein optionally the barrier film is selected from polyethylene terephthalate (PET), ethylene vinyl alcohol (EVOH), and polyvinyl fluoride (PVF) barrier polymer films, and optionally the barrier film is textured or embossed.

15. The method for producing a waterproofing material or membrane of claims 12 or 14 or the method for waterproofing a surface of any one of claims 13 or 14, wherein the amount of hardener in the mixture is from 0.1 to 3% w/w, based on the total weight of the mixture.
